# EUROPEAN PATENT APPLICATION

(11) **EP 4 763 964 A1**
(43) Date of publication of application: **24.06.2026**
(21) Application number: 25225830.6
(22) Date of filing: 19.12.2025
(51) Int. Cl.: C12F 3/08, C12F 3/10

(54) **A METHOD FOR PROCESSING BREWER'S YEAST SIDE STREAMS**

(30) Priority: 23.12.2024 BE 202405931
(71) Applicant: Yeafa NV, 8400 Oostende (BE)
(72) Inventor: DE GUSSEM, Ewoud, 8400 Oostende (BE); BRODEOUX, Pieter, 8400 Oostende (BE); BRYON, Jelle, 8400 Oostende (BE)
(74) Representative: Brantsandpatents bv

(57) **Abstract**

The present invention relates to a method for processing a spent brewer's yeast stream in a biorefinery via distillation, wherein the spent brewer's yeast stream substantially consists of a water-alcohol mixture and yeast cells, comprising: separating the yeast cells from the water-alcohol mixture by means of an evaporation process in an evaporator and drying the separated yeast cells by spray drying using a heated air stream, wherein the heated air stream has a temperature of approximately 190°C-200°C and that the separated yeast cells are in contact with the heated air stream for approximately 15-20 seconds.

## Description

### TECHNICAL FIELD

The invention relates to a method for processing a spent brewer's yeast stream in a biorefinery. The invention relates in particular to a method for separating the spent brewer's yeast stream into yeast cells and a water-alcohol mixture.

### PRIOR ART

US 20230337693 discloses methods and systems for concentrating a solid stream recovered from one or more process streams derived from beer in a biorefinery, by subjecting the recovered solid stream to an evaporation system to remove moisture and form a concentrated, recovered solid stream.

The current brewing industry generates considerable amounts of side streams, such as brewer's yeast, which are often considered as waste. These side streams comprise, however, valuable components such as yeast cells and ethanol, which can potentially be recovered and used in other industries. Traditionally, these side streams are not optimally utilized, which leads to wastage of usable materials and increased waste processing costs. An important problem is the inefficient separation of yeast cells and ethanol from the spent brewer's yeast stream, which limits the value and potential applications of the recovered products. Yeast is a temperature-sensitive product whereby choosing the parameters will prevent the yeast from undergoing undesired degradation and accompanying flavor change. Moreover, conventional processes often require high energy input, which contributes to the operational costs and the environmental impact of the biorefining processes. The feed & petfood market demands specific product characteristics, such as a smaller particle size and finer distribution of yeast powder, which are difficult to achieve with traditional methods. There is thus an urgent need for a more efficient process that not only optimizes the separation of yeast cells and ethanol, but also improves the energy efficiency and delivers high-quality products for specific market segments.

### SUMMARY OF THE INVENTION

The invention relates to a process for the processing of a spent brewer's yeast stream in a biorefinery, wherein yeast cells and a water-alcohol mixture are separated by means of an evaporation process. The yeast cells are subsequently dried by spray drying with a heated air stream, which results in a powder with a unique particle size and texture. The intermediate water-alcohol mixture undergoes distillation according to claim 1. Preferred embodiments are shown in claims 2 to 12.

In a second aspect, the invention relates to yeast cell granules according to claim 13. In a third aspect, the invention relates to a distillate according to claim 15.

In a fourth aspect, the invention relates to a water-alcohol mixture according to claim 16.

### DETAILED DESCRIPTION

The term "spent brewer's yeast stream" refers in the present invention to the spent yeast stream obtained from breweries, which comprises both yeast cells and a water-alcohol mixture.

By the term "evaporation process" is meant in the present invention the process of separating yeast cells from a water-alcohol mixture by means of evaporation in an evaporator.

The term "spray drying" refers to a process wherein separated yeast cells are dried by atomizing them in a chamber with a stream of heated air, whereby the moisture evaporates rapidly and the separated yeast cells are converted into a dry powder. This powder has a specific particle size and texture.

The term "mechanical vapor recompression" refers to the process of compressing the vapor fraction that is generated during evaporation, which comprises a water-alcohol mixture.

The term "volume average particle size" refers to the average particle size of the yeast, calculated on the basis of the total volume of the particles in a given sample. This means that larger particles, which occupy a larger volume, have more influence on the final average particle size than smaller particles. This measurement is crucial for assessing the consistency and quality of the yeast powder.

The term "sterilization step" specifically refers to the process step wherein the condensed water-alcohol mixture is exposed for a certain period of time to a temperature that is high enough to eliminate unwanted microorganisms and thus ensure the safety and quality of the final product.

The term "intermediate water-alcohol mixture" refers to the mixture that is formed after the evaporation process.

The term "distillation column" refers to a vertical structure that is used in the distillation process to separate different components of a liquid mixture on the basis of their boiling points. It works by heating the mixture, whereby the components evaporate and condense at different heights in the column. This process makes use of a considerable amount of thermal power to achieve the desired purity of the distillate.

The term "trays" refers to the trays within the distillation column that are used to facilitate the separation of components.

The term "water-ethanol mixture" refers to the mixture obtained by the method described in the invention.

The term "intermediate water-alcohol mixture" refers to a mixture that is obtained by the invention.

The term "D50 value" of a volumetric measurement with dynamic light scattering (DLS) represents the median diameter of the particle size distribution. It is the diameter whereby 50% of the total volume of the measured particles is smaller than the D50 value and 50% larger.

As used in this document, the articles "a", "an" and "the" refer to both the singular and the plural, unless the context clearly dictates otherwise. For example, "a segment" means one or more than one segment.

When "about", "approximately" or "around" is used in this document with respect to a measurable quantity, a parameter, a duration or a point in time, and the like, it is intended to mean variations of ±20% or less, preferably ±10% or less, more preferably ±5% or less, even more preferably ±1% or less, and still more preferably ±0.1% or less of the cited value, insofar as such variations are applicable to the invention. It is to be understood, however, that the value of the quantity to which the term "about", "approximately" or "around" is applied is itself explicitly disclosed.

The terms "comprise", "comprising", "consist of", "consisting of", "provided with", "contain", "containing", "include", and "including" are synonyms and are inclusive or open terms indicating the presence of what follows, and which do not exclude or preclude the presence of other components, features, elements, members or steps known from or described in the prior art.

The citation of numerical ranges by their endpoints includes all integers, fractions and/or real numbers between the endpoints, inclusive.

Unless otherwise defined, all terms used in the description of the invention, including technical and scientific terms, have the meaning commonly understood by a person skilled in the art to which the invention pertains. For a better understanding of the description of the invention, the following terms are explicitly defined.

In a first aspect, the invention relates to a method for processing a spent brewer's yeast stream in a biorefinery via distillation, wherein the spent brewer's yeast stream substantially consists of a water-alcohol mixture and yeast cells, comprising
∘ separating the yeast cells from the water-alcohol mixture by means of an evaporation process in an evaporator.

∘ drying the separated yeast cells by spray drying using a heated air stream characterized in that the heated air stream has a temperature of about 190°C-200°C and that the separated yeast cells are in contact with the heated air stream for about 15-20 seconds.

The spray dryer plays a role in the process by transforming the concentrated yeast into a powder with unique properties. The inlet temperature of the air stream, defined as the temperature upon entering the spray dryer, varies between 190°C and 200°C, and the drying time, the time of contact of the separated yeast cells with the heated air stream, amounts to 15-20 seconds. These parameters have been carefully optimized to guarantee a uniform particle size and a high product quality, which is essential for, among others, the application in the feed and pet food market. It is important to note that the inlet temperature of the air stream is not limited to the specified range; in a further embodiment, the inlet temperature can vary between 180°C and 210°C, more preferably between 185°C and 205°C, even more preferably between 187°C and 203°C, and most preferably between 189°C and 201°C. The drying time can likewise vary, in a further embodiment between 10 and 25 seconds, more preferably between 12 and 23 seconds, even more preferably between 14 and 22 seconds, and most preferably between 15 and 20 seconds.

The spray drying process, in combination with the energy-saving separation of yeast cells from the water-alcohol mixture, optimizes the functional properties of the powder. This results in a more efficient production stream and lower energy costs, which contributes to a more sustainable process for the feed and pet food market. The powder that is produced has a smaller particle size and a finer distribution than comparable products on the market. These properties make the powder particularly suitable for applications where a fine texture and a light color are desired.

In a preferred embodiment, the method is carried out, wherein the evaporation process takes place at a pressure between 0.20 and 0.35 bar. In a further embodiment, the method is carried out with a temperature of 65°C to 74°C.

In a preferred embodiment, the process is carried out at a pressure range of 0.20 to 0.35 bar and a temperature range of 65 to 74°C, wherein these parameters contribute to an energy-efficient evaporation. Optionally, the pressure can be further optimized within a range of 0.1 to 0.4 bar, wherein more preference is given to a range of 0.15 to 0.35 bar, and even more preference to a range of 0.20 to 0.3 bar. The temperature can also be adjusted within a range of 60 to 80°C, wherein more preference is given to a range of 65 to 75°C, and even more preference to a range of 68 to 72°C. These specific pressure and temperature ranges are preferably chosen to maximize the operational efficiency and minimize the energy costs.

In a further preferred embodiment, the pressure and temperature settings can be optimized for different phases of the evaporation process. For example, in a first phase the pressure can preferably lie between 0.20 and 0.3 bar, while the temperature preferably lies between 65 and 70°C. In a second phase the pressure can preferably lie between 0.25 and 0.35 bar, with a temperature preferably between 70 and 74°C. This phased approach can optionally result in an even more efficient separation of ethanol and water from the yeast stream.

Furthermore, in a preferred embodiment the mechanical vapor recompression (MVR) can be applied to compress the vapor to a pressure of preferably 0.1 to 0.15 bar, with a temperature increase of preferably 7 to 11°C. This MVR technique contributes to a further energy saving through the reuse of vapor, which offers an additional advantage in terms of lower operational costs.

According to a preferred embodiment, the method comprises a vapor fraction generated during the evaporation process, which comprises the water-alcohol mixture, undergoing a mechanical vapor recompression. The vapor fraction is then further compressed to a vapor pressure of 0.1-0.15 bar and the vapor fraction undergoes a temperature increase of 7-11°C relative to the spent brewer's yeast stream in the evaporator.

In a preferred embodiment, the process comprises the application of mechanical vapor recompression (MVR) for improved energy efficiency. Optionally, the vapor fraction released during the concentration process is mechanically compressed, whereby it is returned to the system at an increased pressure and temperature. This process makes it possible to reuse the thermal energy that would otherwise be lost within the system. The reused heat contributes to a considerable reduction of the external energy requirements, whereby the total energy efficiency of the process is improved.

According to a preferred embodiment, the method takes place wherein an evaporation process is carried out at a pressure between 0.20 and 0.35 bar and a temperature of 65°C to 74°C. Subsequently, the temperature of the compressed vapor is increased by 7 to 11°C, wherein each temperature increase within this range can be considered as a target value. This leads to an increased evaporation capacity, which results in a faster separation of the water-alcohol mixture. The pressure of the vapor can preferably vary, wherein a range between 0.1 and 0.15 bar is considered as ideal, although lower or higher values within reasonable limits can also be considered.

The use of excess vapor for the preheating of the incoming liquid is another important feature of this invention, which results in further energy savings. This approach, together with the mechanical vapor recompression, distinguishes the process from other known processes, such as those described in the prior art. The result is a production process that is not only economically advantageous, but also contributes to environmental sustainability by efficiently using available resources and minimizing waste.

By using MVR, the thermodynamic efficiency of the evaporation process can be further optimized. In a preferred embodiment, the mechanical vapor recompression is integrated with other process steps, such as the preheating of the incoming liquid by means of excess vapor. This provides for a further reduction of the energy consumption and contributes to an increased productivity of the biorefinery process.

The application of MVR in this process optionally also offers advantages in the area of sustainability, by contributing to a reduction of the ecological footprint. The efficient reuse of energy sources reduces the dependence on fossil fuels and supports the transition to more sustainable production methods.

Preferably, the excess vapor that is released in the process can also be used for preheating the incoming yeast stream. This reuse strategy can optionally contribute to a further reduction of the energy costs and an increase of the overall process yields. In an even more preferred embodiment, the sterilization step can be carried out at a temperature of 80 to 85°C for 10 to 15 seconds, which contributes to the safety and quality of the end product.

According to a preferred embodiment, the method comprises that the mechanical vapor recompression occurs in two steps, and wherein a second step comprises a pump that has an energy consumption of 35-45 kW.

In a preferred embodiment, the process for concentrating brewer's yeast comprises the use of mechanical vapor recompression. This process preferably improves the energy efficiency by compressing the vapor in the first step to a pressure of 0.1 to 0.15 bar, with a temperature increase of 7 to 11°C. In a more preferred embodiment, the pressure can vary between 0.05 and 0.20 bar, with a temperature increase of 5 to 12°C, and even more preferably between 0.08 and 0.18 bar with a temperature increase of 6 to 10°C. This stepwise compression ensures that the energy costs are significantly reduced, which contributes to a more sustainable process.

In a further preferred embodiment, the second step of the mechanical vapor recompression is performed at a pressure of 0.20 to 0.35 bar, wherein the temperature is further increased by 7 to 11°C. More preferably, the pressure lies between 0.15 and 0.4 bar, with a temperature increase of 6 to 12°C, and even more preferably between 0.18 and 0.33 bar with a temperature increase of 7 to 10°C. Through this two-step approach, the process can further optimize the energy efficiency, which not only lowers the operational costs, but also reduces the ecological footprint.

The use of mechanical vapor recompression is preferably integrated with other process steps, such as the preheating of the incoming liquid with excess vapor. This can preferably contribute to a further reduction of the energy consumption, whereby the process becomes economically more attractive. In a more preferred embodiment, the excess vapor can be used to preheat the liquid to temperatures between 50 and 70°C, more preferably between 55 and 65°C, and even more preferably between 58 and 63°C.

In a preferred embodiment of the process, at least one heat exchanger is heated by the vapor fraction that is generated during the evaporation process, which results in an improved energy efficiency through reuse of heat. This reuse of heat leads to a significant reduction of the operational costs and contributes to a more sustainable process. In a further embodiment, the spent brewer's yeast stream is heated in the heat exchanger by this vapor fraction, which leads to a more efficient preheating and reduction of the total energy requirement. This not only reduces the energy costs, but also increases the speed of the process, which results in a higher productivity. In a still further embodiment, two heat exchangers are heated by the vapor fraction that is generated during the evaporation process, which optimizes the heat transfer and increases the thermal efficiency of the process. This improves the consistency of product quality. Additionally, in another embodiment, the vapor fraction is first mechanically compressed before it heats the two heat exchangers and subsequently heats up the spent brewer's yeast stream, which results in a further reduction of the energy consumption and an improved temperature control. This leads to a more stable process and reduces the chance of thermal degradation of the ingredients.

In another preferred embodiment, the process can also benefit from the specific sterilization step, in which the liquid is briefly heated to 80-85°C for 10-15 seconds. This step can preferably improve the microbial safety of the final product, whereby the quality and shelf life of the powder and the ethanol are ensured. Through this combination of steps and parameters, the process becomes not only more efficient, but also more versatile in the application of the final products.

According to a preferred embodiment, the method takes place such that the separated yeast cells after spray drying have a volume average particle size (D50) of 50 µm.

In a preferred embodiment, the yeast powder comprises a specific average particle size of 50 µm, which optionally promotes the uptake of nutrients in animal feed. This smaller particle size can increase acceptability by animals, while ensuring a consistent product quality that meets customer expectations. The yeast powder with these specific properties may be more attractive to the feed and pet food market, potentially resulting in increased market acceptance and customer satisfaction.

It is optional for the average particle size of the powder to vary within a range of 40 to 70 µm, more preferably between 45 and 65 µm, and even more preferably between 48 and 60 µm. This variation in particle size can increase the versatility of the powder by adapting it to different animal feed needs and market preferences.

In a further preferred embodiment, the powder can be obtained by a spray drying process wherein the inlet temperature, the heated air that is introduced into the spray dryer, and the outlet temperature, the temperature after drying, are accurately controlled to achieve the desired particle size. This process can preferably take place at an inlet temperature varying from 180 to 210°C, more preferably between 190 and 200°C, and an outlet temperature varying from 80 to 90°C, more preferably between 82 and 86°C. Through these temperature settings, the consistency in powder quality can be ensured, whereby market acceptance can increase.

Furthermore, the viscosity of the concentrated spent brewer's yeast stream prior to drying can play an important role in the final particle size of the powder. In a preferred embodiment, the viscosity of this stream is adjusted to the specific drying conditions to achieve the desired particle size. It is optional that the viscosity varies depending on the specific composition of the stream, which enables accurate control of the process parameters.

In a further preferred embodiment, mechanical separation methods can be applied to improve the efficiency of the separation process, which can contribute to the production of powder with a uniform particle size. These methods can for example comprise centrifuges or decanters, which optionally reduce fouling and optimize the separation of solid and liquid components. Hereby the production of a consistent powder can be promoted, which can improve the overall product quality and customer satisfaction.

In a preferred embodiment, the condensed water-alcohol mixture undergoes a sterilization step that significantly reduces the microbial load. This process preferably comprises heating the mixture to a temperature that is sufficiently high to effectively eliminate microorganisms, while the integrity of the ethanol is maintained. The temperature for this sterilization step is preferably between 60 and 100°C, more preferably between 70 and 95°C, more preferably between 75 and 90°C, more preferably between 80 and 85°C, and most preferably around 82°C. This sterilization ensures that the end product is safe for further processing or consumption and meets the food safety requirements.

The sterilization process can optionally be carried out by means of direct or indirect heating techniques, depending on the specific requirements of the application. Direct heating can for example be achieved by injecting steam into the mixture, while indirect heating can be realized by the use of heat exchangers. In a preferred embodiment, the sterilization is carried out for a duration that varies depending on the chosen temperature, preferably between 5 and 30 seconds, more preferably between 8 and 25 seconds, more preferably between 10 and 20 seconds, more preferably between 12 and 18 seconds, and most preferably around 15 seconds.

By integrating this sterilization step into the process, the safety and usability of the end product for further applications is significantly improved. This is especially important in applications where the end product is used in the food or beverage industry, where strict hygienic standards must be observed. Moreover, the sterilization step can optionally contribute to the extension of the shelf life of the product by minimizing the microbial activity. The sterilization step is therefore an important addition to the process, which can optionally be adjusted to specific requirements of different market segments or production conditions.

According to a preferred embodiment, the method comprises that the vapor from the evaporation process is condensed and comprises a condensed water-alcohol mixture and subsequently undergoes a sterilization step at 80-85°C for 10-15 seconds.

In a further embodiment, the process can also comprise a specific sterilization step, wherein the liquid is sterilized at a temperature of 80-85°C for 10-15 seconds. This step is not only intended to ensure the safety and quality of the end product, but also contributes to the overall efficiency of the process by eliminating possible contaminations.

In a preferred embodiment, the mechanical vapor recompression is combined with a specific sterilization step, wherein the liquid is heated for 10 to 15 seconds to a temperature between 80 and 85°C. This sterilization step can optionally be further adjusted to ensure the safety and quality of the end product, depending on the specific requirements of the production process.

According to a preferred embodiment, the method comprises that the heated air stream, after spray drying, has an outlet temperature of 81-85°C and a relative humidity of 11-13%.

In a preferred embodiment, the process comprises a controlled outlet temperature of 81-85°C and a relative humidity of 11-13% during the spray drying of the separated yeast cells. These parameters contribute to an optimal heat transfer, which results in an efficient drying of the separated yeast cells. This process can lead to a consistent moisture content in the end product, which contributes to an improved product quality without damaging the cells by overheating.

The controlled outlet temperature is preferably between 70 and 90°C, more preferably between 75 and 88°C, even more preferably between 78 and 86°C, and most preferably between 81 and 85°C. The relative humidity level is preferably between 10 and 15%, more preferably between 11 and 14%, even more preferably between 11.5 and 13.5%, and most preferably between 11 and 13%.

By maintaining these specific conditions, the process can preserve the integrity of the separated yeast cells, which is essential for obtaining an end product with a light color and a non-granular texture. These properties are particularly valuable for applications in the feed & petfood market, where product consistency and quality are of great importance.

According to a preferred embodiment, the method comprises a step wherein the separated yeast cells undergo post-drying for a further 20 seconds at 35°C after spray drying.

In a further preferred embodiment, the spray drying can be carried out in an environment where the air flow and pressure are carefully controlled to optimize the drying rate. The drying rate is preferably between 10 and 25 seconds, more preferably between 12 and 22 seconds, even more preferably between 14 and 20 seconds, and most preferably between 15 and 20 seconds.

The combination of these controlled parameters ensures that the process is not only energy-efficient, but also results in a final product that meets the high demands of the market. By carefully regulating the moisture content and temperature, the process can contribute to lower energy costs and higher productivity, which is economically advantageous for the production of yeast powder.

In a preferred embodiment, the yeast powder production process comprises a post-drying process at a temperature of about 35°C, wherein the moisture is uniformly removed without inflicting thermal damage to the powder. This process can optionally be improved by the addition of a surface vapor removal step, which is specifically directed at removing excess vapor from the surface of the powder particles. This post-drying step is preferably designed to increase the quality of the final product by maintaining the integrity of the powder particles and minimizing unwanted agglomeration.

Preferably, the post-drying period lies within a range of 15 to 25 seconds, wherein more preference is given to a period between 18 and 22 seconds, and even more preference to a period of 20 seconds. This time frame ensures that the moisture content of the powder is reduced in a controlled manner, resulting in a final product with a consistent texture and a finer distribution of the particle size.

The yeast powder obtained by this method preferably has a light color and a smooth, non-granular texture, which makes it attractive for use in the feed & petfood market. The unique properties of the powder, such as the smaller particle size and the finer distribution, are achieved by careful management of the process parameters during both the drying and the post-drying steps.

In a further preferred embodiment, the process can make use of a controlled supply of air or gas during post-drying to promote the removal of surface vapor. The temperature of this air or gas is preferably between 30 and 40°C, with more preference for a range of 32 to 38°C, and even more preference for a temperature of 35°C. This controlled supply contributes to the efficiency of the post-drying process and helps in maintaining the desired product quality.

By the use of these post-drying methods, the yeast powder can exhibit improved shelf life and stability, which makes it suitable for long-term storage and transport without quality loss.

According to a preferred embodiment, the method comprises forming an intermediate water-alcohol mixture after the evaporation process with an ethanol content of at least 6.5%. In a preferred embodiment, increasing the ethanol content in the intermediate water-alcohol mixture to 6.5% contributes to a more efficient distillation process by optimizing the separation of ethanol and water. This can result in a reduction of the energy requirement per produced quantity of ethanol. The ethanol content of 6.5% in the intermediate mixture can preferably be obtained by careful control of the parameters in the concentration process, wherein the evaporator plays a crucial role.

Preferably, the evaporator can be operated under pressure conditions ranging from 0.20 to 0.35 bar, wherein the temperature preferably lies between 65 and 74°C. This specific setting of the evaporator contributes to the efficient removal of water and ethanol, whereby the desired ethanol content in the intermediate mixture is achieved. More preferably, mechanical vapor recompression (MVR) can be applied to compress the vapor to a lower pressure and a temperature increase of 7-11°C, which contributes to an energy-efficient reuse of the vapor.

In a further preferred embodiment, the liquid can be sterilized at temperatures between 80 and 85°C for 10 to 15 seconds. This sterilization step can optionally be integrated to ensure the safety and quality of the final product. Moreover, excess vapor from the system can be used to preheat the incoming liquid, which yields further energy savings.

Preferably, the ethanol content after the first purification step in the evaporator can be 6.5%, while after the distillation an ethanol content of 85% can be achieved. The distillation column can be operated with a thermal power of 1 to 1.1 MW, wherein the bottom temperature is 100 to 103°C at a gauge pressure of 0.04 bar. These specific parameters contribute to the optimization of the distillation process, which results in a higher energy efficiency and lower costs.

By implementing these preferred embodiments, the operational costs can be reduced and the energy efficiency of the process can be improved, while simultaneously the quality of the final product is guaranteed.

According to a preferred embodiment, the method comprises that the distillation comprises a distillation column wherein a distillate is formed with an ethanol content of at least 85%.

In a preferred embodiment, the distillation comprises a distillation column. In a still further embodiment, a distillate is formed in the distillation column that comprises 85% ethanol.

In a preferred embodiment, a distillate is obtained with an ethanol content of 85%, which considerably improves the purity of the ethanol. This increased purity level can promote the efficiency and suitability of ethanol for various applications, such as fuel for vehicles, industrial solvents and other chemical processes. The production of such a high-quality distillate can optionally be achieved by careful control of the distillation parameters, including the temperature, pressure and reflux ratios within the distillation column.

According to a preferred embodiment, the method comprises that the distillation column operates with a thermal power of 1-1.1 MW, a bottom temperature between 100-103°C, and a gauge pressure of 0.04 bar.

In a preferred embodiment, the distillation column operates with a thermal power of 1-1.1 MW. In a still further preferred embodiment, the distillation column has a bottom temperature between 100-103°C. In a still further preferred embodiment, the distillation column has a gauge pressure of 0.04 bar.

Preferably, the temperature in the distillation column is between 100°C and 103°C at the bottom, with a pressure of 0.04 bar gauge pressure. More preferably, the temperature can vary from 99°C on the fifth tray to 79-81°C at the top of the column. The reflux temperature can preferably vary from 50-55°C, with a reflux ratio that more preferably is between 15% and 29%. These specific parameters contribute to the production of an ethanol content that more preferably reaches 85%.

The feed temperature of the distillation column can preferably be around 78°C, with a feed throughput rate that more preferably is between 4.8 and 7 m³/h, depending on the dry matter of the feed. By carefully managing these parameters, the purity of the produced ethanol can be maximized, which contributes to a higher yield and a broader applicability of the end product.

In a further preferred embodiment, the process can also comprise a mechanical vapor recompression (MVR) system to improve the energy efficiency, whereby the energy consumption is further reduced. These optimizations in the distillation process contribute to the production of an ethanol of high purity, which can improve the overall sustainability and economic feasibility of the process. The end product can optionally be used in various market segments that impose requirements on the purity and quality of the ethanol, such as the pharmaceutical industry, the food industry and the chemical industry.

In a preferred embodiment, the invention comprises a distillation column with a thermal power that preferably is between 1 and 1.1 MW. This power, in combination with carefully controlled pressure and temperature levels, optionally contributes to an improved efficiency of ethanol purification. Through these controlled conditions, the yield of the purification process can be increased, which in turn leads to lower energy costs.

The pressure in the distillation column is preferably set at a value that ensures an optimal separation of ethanol and water. This pressure can preferably vary, for example between 0.03 and 0.05 bar, more preferably between 0.02 and 0.05 bar, still more preferably between 0.03 and 0.04 bar, and most preferably around 0.04 bar. Through these preferences, the distillation column can work more efficiently, with a better yield of ethanol purification.

Likewise, the temperature in the distillation column is preferably accurately regulated to optimize the purification. The bottom temperature can preferably vary between 99 and 103°C, more preferably between 100 and 102°C, still more preferably between 101 and 102°C, and most preferably around 101.8°C. At the top of the column, the temperature can preferably vary between 78 and 82°C, more preferably between 79 and 81°C, still more preferably around 80°C.

The use of a reflux preferably with a ratio between 10 and 30%, more preferably between 15 and 29%, still more preferably around 20%, optionally contributes to the increased efficiency of the purification process. This reflux ratio can improve the concentration of ethanol in the final product, which yields a higher product quality.

In a further preferred embodiment, the density of the reflux can preferably be set to values that vary between 800 and 840 kg/m³, more preferably between 810 and 830 kg/m³, even more preferably around 820 kg/m³. These settings can further reduce the energy costs, which benefits the overall efficiency of the process.

According to a preferred embodiment, the method comprises that the distillation column comprises one or more trays.

In a preferred embodiment, the distillation column comprises multiple trays that provide for an improved purification quality of ethanol, resulting in a product with a higher purity. These multiple trays in the distillation column are preferably designed to promote an optimal separation of ethanol from other components. The purification quality of ethanol can optionally be further improved by adjusting the configuration and the number of trays in the column.

The distillation column can preferably be executed with a varying number of trays, for example between 2 and 50 trays. More preferably, the column comprises between 15 and 45 trays, even more preferably between 20 and 40 trays, and most preferably between 25 and 35 trays. This configuration ensures that the distillation column can be flexibly adjusted to different process requirements and purity levels that are desired for the final product.

Another preferred aspect of this embodiment concerns the possibility to adjust the pressure and temperature within the distillation column. The pressure in the column can preferably vary between 0.02 and 0.1 bar, more preferably between 0.03 and 0.09 bar, even more preferably between 0.04 and 0.08 bar, and most preferably between 0.05 and 0.07 bar. Similarly, the temperature in the column can preferably vary between 70 and 110°C, more preferably between 75 and 105°C, even more preferably between 80 and 100°C, and most preferably between 85 and 95°C.

In this preferred embodiment, the distillation column can also optionally be equipped with an advanced control system that continuously monitors and adjusts the purity of the ethanol product based on real-time data. This system can preferably make use of sensors that measure the concentration of ethanol and other components, whereby a constant quality of the final product is guaranteed. These advanced control mechanisms can further contribute to the efficiency and effectiveness of the purification process, resulting in an ethanol product that meets the highest market standards.

In an aspect of the invention, a process is described for the concentration of brewer's yeast and the production of powder and ethanol, wherein use is made of a distillation column with multiple trays. This process is designed to considerably increase the purity of the produced ethanol, which is an important improvement compared to existing technologies.

The process begins with the purchase of spent brewer's yeast streams from breweries. These streams comprise valuable components such as yeast cells and ethanol. The aim is to separate and utilize these components efficiently. The side stream is first concentrated using an evaporator, wherein a large part of the water and virtually all ethanol is removed. This results in two separate streams: a concentrated yeast cell stream and a water-ethanol mixture.

The separated yeast cells are subsequently dried to a powder that is specially developed for the feed & petfood market. This powder distinguishes itself by a smaller particle size and a finer distribution. The process for obtaining this powder comprises a spray dryer, wherein the drying parameters are carefully optimized to achieve the desired powder quality.

In a further embodiment of the process, the concentrated brewer's yeast stream is subsequently dried to a powder with unique properties, such as a smaller particle size and a finer distribution. This powder is highly sought after in the feed and petfood market due to its specific texture and light color. The drying rate and the inlet and outlet temperatures of the dryer are carefully controlled to ensure the quality of the end product. The drying rate preferably lies between 10 and 30 seconds, more preferably between 12 and 25 seconds, even more preferably between 15 and 20 seconds, most preferably between 17 and 19 seconds.

The water-ethanol mixture undergoes a further purification step in a distillation column with multiple trays, which significantly increases the purity of the ethanol product. The distillation column is designed such that the ethanol content reaches 85%. The distillation takes place under specific temperature and pressure conditions, with a thermal energy input of 1-1.1 MW. The bottom temperature of the column lies between 100.5-101.8°C at a gauge pressure of 0.04 bar, while the top of the column has a temperature of 79-81°C. The reflux ratio varies from 15-29%, with a reflux temperature of 50-55°C.

The specifications of the distillation column make it possible to achieve a high purity of ethanol, which is essential for the market value of the product. The purity of the ethanol is further promoted by the use of a mechanical vapor recompression (MVR) system, which compresses the vapor to a lower pressure and a temperature increase of 7-11°C. This contributes to an energy-efficient reuse of the vapor within the process.

Moreover, in a further embodiment of the invention, the liquid is sterilized at a temperature of 80-85°C for 10-15 seconds. This step is crucial for ensuring the safety and quality of the end product. The sterilization helps in eliminating possible contaminants, whereby the reliability of the process is increased.

The process also makes use of excess vapor for preheating the incoming liquid, which leads to further energy savings. This specific application of excess vapor is a distinguishing feature of the invention and contributes to the overall efficiency of the process.

The described aspects of the process offer considerable advantages, including improved product quality, increased energy efficiency, and a sustainable approach through the utilization of otherwise wasted side streams. The process is designed to meet the specific requirements of the feed & petfood market, with a focus on delivering products with high added value.

In an aspect of the invention, the process comprises the use of excess vapor for preheating incoming liquids. This innovative process offers considerable advantages in the area of energy efficiency and cost savings. The core of this invention lies in the effective reuse of energy that would otherwise be lost in conventional processes. By strategically utilizing the excess vapor, which would otherwise be discharged or condensed without further useful application, the energy content of the vapor is optimally utilized to preheat the incoming liquid stream. This reduces the need for external energy sources for heating, which leads to a considerable reduction in operational costs.

In a further embodiment, the process can be optimized by regulating the pressure and temperature of the vapor. It is preferably such that the vapor is compressed to a pressure of for example 0.1 to 0.15 bar, with a temperature increase of 7 to 11°C relative to the liquid to be heated. More specifically, the pressure of the vapor can vary from a minimum of 0.05 bar to a maximum of 0.20 bar, wherein a more preferred range lies between 0.08 and 0.18 bar. With regard to the temperature increase, this can vary from minimally 5°C to maximally 15°C, wherein a more preferred range lies between 6°C and 13°C.

Another important advantage of this process is the reduction of fouling in the system. By using the vapor for preheating, the chance of deposition of solids and other impurities in the heat exchangers is reduced. This leads to a longer operational lifetime of the equipment and reduces the need for regular maintenance operations.

In an alternative embodiment, the process can be further refined by the specification of the liquid stream that is preheated. The throughput rate of the liquid can for example vary depending on the dry matter content, with a preference for a range of 5 to 10 m³/h, more specifically between 6 and 9 m³/h. By precisely regulating these parameters, the process can be tuned to the specific needs of different applications, whereby the efficiency and effectiveness are further improved.

The use of excess vapor for preheating also offers environmental benefits. By improving the energy efficiency of the process, the total CO₂ emission is reduced, which contributes to a more sustainable production environment. Moreover, the use of a side stream that would otherwise be considered as waste contributes to a circular economy, by creating valuable products from what would otherwise be considered as residual material.

In a still further embodiment, the process can also be adapted to benefit from variations in the composition of the incoming liquid stream. Through real-time monitoring and adjustment of the process parameters, the system can dynamically adapt to changes in the composition, such as variations in the ethanol or water concentration, whereby the consistency and quality of the end product are ensured. This makes the process not only more efficient, but also more flexible and better able to respond to changes in the supply chain or market demand.

In summary, the use of excess vapor for preheating incoming liquids offers a range of advantages, from energy saving and cost reduction to ecological and operational improvements. These aspects make the process not only innovative, but also particularly valuable in the context of modern industrial production.

In an aspect of the invention, the process relates to an innovative method for concentrating brewer's yeast and the production of powder and ethanol, wherein mechanical vapor recompression (MVR) is used to maximize energy efficiency and minimize the ecological footprint. The process begins with the purchase of the side stream of brewer's yeast from breweries, which comprises valuable components such as yeast cells and ethanol. This stream is first subjected to a concentration step using an evaporator, wherein a considerable part of the water and virtually all ethanol is removed. This results in two separate streams: concentrated brewer's yeast and a water-ethanol mixture.

The application of mechanical vapor recompression in this process offers considerable advantages. By compressing the vapor, the pressure is increased and the temperature is increased by 7-11°C, which enables a more efficient reuse of the vapor. This technology not only contributes to energy saving, but also reduces the operational costs and the ecological impact of the process. The use of MVR is particularly advantageous in comparison with conventional methods because it reduces the need for external energy sources and increases the overall efficiency of the process.

The water-ethanol mixture that is produced during the concentration step is further purified in a distillation column. The ethanol concentration is increased from 6.5% after the evaporation to 85% after the distillation, which makes the mixture suitable for sale on the ethanol market. The distillation takes place under specific temperature and pressure conditions to ensure the purity and quality of the end product. The bottom temperature of the distillation column is preferably between 95 and 105°C, more preferably between 98 and 103°C, still more preferably between 99 and 102°C, most preferably between 100 and 101°C.

Another important aspect of the invention is the sterilization step of the liquid, which takes place at a temperature of 80-85°C for 10-15 seconds. This step is crucial for guaranteeing the safety and quality of the end product, because it eliminates possible contaminants and extends the shelf life of the mixture. The sterilization temperature can be adjusted within a range of 70 to 90°C, more preferably between 75 and 87°C, even more preferably between 78 and 85°C, most preferably between 80 and 83°C.

Finally, excess vapor in the process is used to preheat the incoming liquid, which leads to further energy savings. This innovative approach to energy recovery contributes to the overall sustainability of the process and strengthens the position of the invention as an environmentally friendly solution for the processing of spent brewer's yeast streams.

In a second aspect, the invention relates to yeast cell granules obtained by any of the methods of the present invention.

In a third aspect, the invention relates to distillate obtained by any of the methods of the present invention.

In a fourth aspect, the invention relates to an intermediate water-alcohol mixture obtained by any of the methods of the present invention.

### EXAMPLES

The present invention will now be further illustrated by means of the following examples. The present invention is in no way limited to the examples given or to the embodiments illustrated in the figures.

### Example 1.

In a first experiment, mechanical vapor recompression (MVR) was applied to the vapor fraction that was generated during the evaporation process of a spent brewer's yeast stream. The vapor fraction was compressed to a pressure of 0.1-0.15 bar with a temperature increase of 9°C, which resulted in a significantly improved energy efficiency. This led to a reduction of the total energy consumption by 25%, which was a surprising effect compared to conventional methods without MVR.

### Example 2.

The spray drying process was optimized by setting the air stream to a temperature of 195°C and 18 seconds in contact with the air stream. This resulted in a yeast powder with a uniform particle size (D50) of 50 µm and a consistent moisture content. The powder showed improved nutrient uptake in animal feed, which significantly increased market acceptance.

### Example 3.

During another experiment, the sterilization step was applied to the condensed water-alcohol mixture at 82°C for 12 seconds. This step reduced the microbial load by 99%, which improved the safety and usability of the end product for further processing.

### Example 4.

In an experiment with the distillation column, a thermal power of 1.05 MW was applied, with a bottom temperature of 101°C. This resulted in an ethanol purity of 85%, which significantly improved the efficiency of the ethanol purification and reduced the energy costs by 15%.

### Example 5.

The combined use of mechanical vapor recompression and the use of excess vapor for preheating of the incoming liquid led to an increased energy efficiency of the entire biorefinery process. This resulted in a 20% lower dependence on external energy sources, which significantly improved the sustainability of the process.

It is assumed that the present invention is not limited to any form of implementation previously described and that certain modifications may be made to the presented example without departing from the scope of the appended claims. For example, the present invention has been described with reference to specific temperature and pressure conditions, but it is clear that the invention can be applied under other conditions or to other types of yeast streams. It is clear that the method according to the invention, and applications thereof, are not limited to the presented examples. The present invention is in no way limited to the embodiments described in the examples and/or shown in the figures. On the contrary, methods according to the present invention may be realized in many different ways without departing from the scope of the invention.

The invention will now be further elucidated by means of the following example, without however being limited thereto.

## Claims

1. Method for processing a spent brewer's yeast stream in a biorefinery via distillation, wherein the spent brewer's yeast stream consists substantially of a water-alcohol mixture and yeast cells, comprising:
∘ separating the yeast cells from the water-alcohol mixture by means of an evaporation process in an evaporator; and
∘ drying the separated yeast cells by spray drying using a heated air stream **characterized in that** the heated air stream has a temperature of about 190°C-200°C and that the separated yeast cells are in contact with the heated air stream for about 15-20 seconds.

2. The method according to preceding claim 1, **characterized in that** the evaporation process takes place at a pressure of 0.20-0.35 bar and a temperature between 65°C and 74°C.

3. The method according to any of the preceding claims 1 or 2, **characterized in that** a vapor fraction generated during the evaporation process, which comprises the water-alcohol mixture, undergoes a mechanical vapor recompression, wherein the vapor fraction is compressed to a vapor pressure of 0.10-0.15 bar and undergoes a temperature increase of 7-11°C relative to the spent brewer's yeast stream in the evaporator.

4. The method according to any of the preceding claims 1-3, **characterized in that** at least one heat exchanger is heated by the vapor fraction generated during the evaporation process and wherein the spent brewer's yeast stream is heated in the heat exchanger.

5. The method according to any of the preceding claims 1-4, **characterized in that** the separated yeast cells after spray drying have a volume average particle size, median diameter D50, of about 50 µm.

6. The method according to any of the preceding claims 1-5, **characterized in that** the vapor fraction from the evaporation process is condensed to a condensed water-alcohol mixture and subsequently subjected to a sterilization step at a sterilization temperature of 80-85°C for 10-15 seconds.

7. The method according to any of the preceding claims 1-6, **characterized in that** the heated air stream after spray drying has a temperature of 81-85°C and a relative humidity of 11-13%.

8. The method according to any of the preceding claims 1-7, **characterized in that** the separated yeast cells after spray drying continue to dry for at least 20 seconds at 35°C.

9. The method according to any of the preceding claims 1-8, **characterized in that** an intermediate water-alcohol mixture is formed after the evaporation process with an ethanol content of at least 6.5%.

10. The method according to any of the preceding claims 1-9, **characterized in that** the distillation comprises a distillation column in which a distillate is formed with an ethanol content of at least 85%.

11. The method according to any of the preceding claims 1-10, **characterized in that** the distillation column operates with a thermal power of 1-1.1 MW, a bottom temperature between 100-103°C, and a gauge pressure of 0.04 bar.

12. The method according to any of the preceding claims 1-11, **characterized in that** the distillation column is a tray distillation column.

13. Yeast cell granules obtained by a method according to any of the preceding claims 1-12 **characterized in that** the yeast cell granules have a volume average particle size (D50) of approximately 50 µm.

14. Distillate obtained by a method according to any of the preceding claims 1-12 **characterized in that** it comprises an ethanol content of approximately 85%.

15. An intermediate water-alcohol mixture obtained by any of the preceding claims 1-12.
